# NEW EUROPEAN PATENT SPECIFICATION

(11) **EP 1 321 687 B2**
(45) Date of publication and mention of the opposition decision: **09.07.2014**
(45) Mention of the grant of the patent: 01.08.2007
(21) Application number: 02021798.0
(22) Date of filing: 26.09.2002
(51) Int. Cl.: F16C 33/36

(54) **Bearing assembly for axle shaft pinion and final reduction gear for vehicle**
Lagervorrichtung für eine Ritzelachswelle und ein Endreduktionsgetriebe für Fahrzeuge
Dispositif de palier pour un arbre d'essieu à pignon et un engrenage réducteur final pour véhicule

(30) Priority: 07.12.2001 JP 2001374375
(43) Date of publication of application: 25.06.2003
(73) Proprietor: JTEKT Corporation, Osaka-shi Osaka 542-8502 (JP)
(72) Inventor: Yokota, Kunihiko, Chuo-ku, Osaka-shi, Osaka 542-0081 (JP); Kouda, Kanichi, Chuo-ku, Osaka-shi, Osaka 542-0081 (JP)
(74) Representative: Grünecker, Kinkeldey, Stockmair & Schwanhäusser

(56) References cited:
- JP-A- H09 287 617
- JP-A- H11 247 848
- US-A- 4 336 971
- US-A- 5 492 419
- US-A- 5 975 762
- US-B1- 6 238 095
- 'Schalten oder schalten lassen' 12 January 1990, pages 128 - 129
- FRITZ MEINCK: 'Moderne Ritzellagerungen für die Achsen von Mutzfahrzeugen' 01 January 1990, pages 49 - 51
- BRÄNDLEIN ESCHMANN HASBARGEN WEIGAND: 'Handbuch für Berechnung und Gestaltung von Lagerungen' DIE WÄLZLAGERPRYIX 01 January 1995, pages 18 - 577

## Description

The present invention relates to a bearing assembly for an axle shaft pinion having a double row tapered roller bearing which supports in a cantilever manner a hypoid pinion gear constituting a final reduction gear for a vehicle, see US-A-5492419 showing all of the features of the preamble of claim 1.

Conventionally, as a double row tapered roller bearing, there has been a bearing assembly for an axle shaft pinion of this type in which a pinion shaft is supported in a cantilever manner to a housing.

In this bearing assembly for the axle shaft pinion, the double row tapered roller bearing has had symmetrical structures in opposite areas in an axial direction with respect to a center plane which radially passes a center in an axial direction, and contact angles of rows of tapered rollers on the opposite areas in the axial direction are also set to be the same.

However, there has been a problem, in the above described conventional bearing assembly for the axle shaft pinion, that supporting rigidity has been low and life of the bearing has been short.

Document US 5 975 762 describes a tapered roller bearing having inner and outer races and tapered rollers organized in at least two rows, with the rollers of the one row being generally aligned with the rollers in the other row. The large ends of the rollers are presented toward each other so that the forces which urge the rollers of either row up their tapered raceways are resisted by the rollers of the other row, wherein the end faces of the aligned rollers in the two rows contact each other or else contact intervening elements such as cylindrical rollers or a separating disk.

In view of the above circumstances, an object of this invention is to provide a bearing assembly of a pinion shaft and a final reduction gear for a vehicle in which supporting rigidity and life can be improved.

In order to solve the aforesaid object, the invention is defined by having the arrangement according to claim 1.

Fig. 1 is a sectional view of a first embodiment of a bearing assembly of an axle shaft pinion according to a first embodiment.

Fig. 2 is a sectional view of a second embodiment of a double row tapered roller bearing assembly according to a second embodiment (not part of the invention)

Now, this invention will be described in detail by way of an embodiment as shown in the drawing.

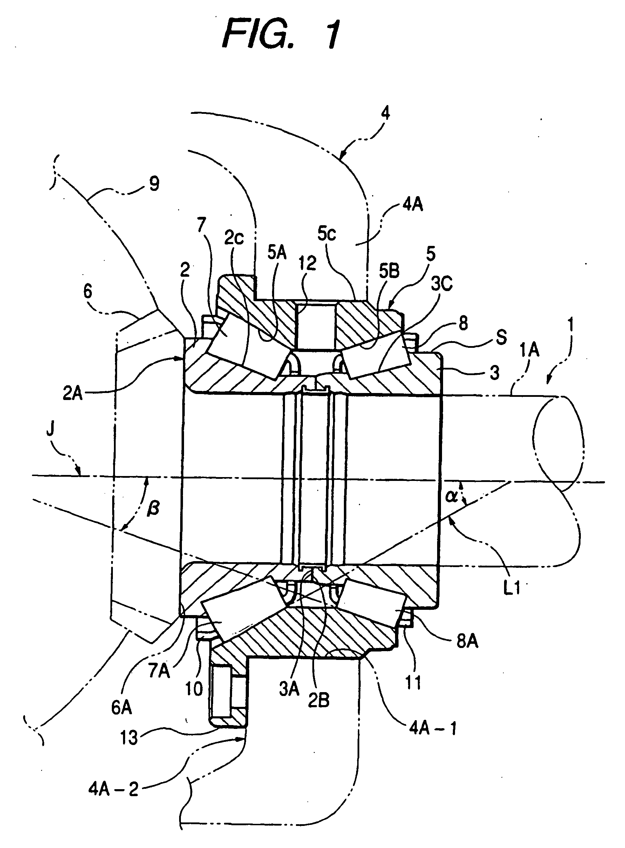

Fig. 1 shows in section an embodiment of the bearing assembly for the axle shaft pinion. This embodiment includes a double row tapered roller bearing S which is provided with inner rings 2, 3 fixed by tight fit to a shaft portion 1A of a pinion shaft 1, and an integral outer ring 5 fixed by clearance fit to an inner peripheral face 4A-1 of an opening 4A of a housing 4 which functions as a fixed part.

The above mentioned pinion shaft 1 includes a pinion 6 at its distal end, and this pinion 6 is in mesh with a ring gear 9. This ring gear 9, the pinion shaft 1, the housing 4, and the bearing assembly for the axle shaft pinion in this embodiment constitute, in combination, a final reduction gear for a vehicle.

The above mentioned inner ring 2 is located on the pinion shaft 1 adjacent to the pinion 6, and an end face 2A in an axial direction having a larger diameter is in contact with a back face 6A of the pinion 6. Meanwhile, the above mentioned inner ring 3 is located on the pinion shaft 1 remote from the pinion 6, and an end face 3A in an axial direction having a smaller diameter is in contact with an end face 2B in an axial direction having a smaller diameter of the above described inner ring 2 adjacent to the pinion.

Track faces 2C, 3C of these inner rings 2, 3 are opposed in a radial direction to track faces 5A, 5B of the integral outer ring 5. A row of tapered rollers 7 adjacent to the pinion is arranged between the track face 2C and the track face 5A. A row of tapered rollers 8 remote from the pinion are arranged between the track face 3C and the track face 5B. This row of the tapered rollers 7 is held in an annular cage 10, and respective tapered rollers 7A of this row of the tapered rollers 7 are retained at a predetermined space in a circumferential direction. Meanwhile, the row of the tapered rollers 8 is held in an annular cage 11, and respective tapered rollers 8A of this row of the tapered rollers 8 are retained at a determined space in a circumferential direction. The integral outer ring 5, the inner rings 2, 3, the rows of the tapered rollers 7, 8, and the cages 10, 11 constitute, in combination, the double row tapered roller bearing assembly S.

The integral outer ring 5 is provided with through holes 12 which pass from its outer peripheral face 5C to an inner peripheral face between the track faces 5A and 5B. These through holes 12 are provided in plurality at a determined space in a circumferential direction. In addition, this integral outer ring 5 has a flange 13 adjacent to the pinion, and this flange 13 is fixed to an inner face 4A-2 of the opening 4A in the housing 4.

In this embodiment, a contact angle α of the row of the tapered rollers 7 is set to be 30°, and a contact angle β of the row of the tapered rollers 8 is set to be 20°. It is to be noted that this contact angle α of the row of the tapered rollers 7 means the α formed by a phantom line segment L1 in a plane which extends from the track face 5A of the integral outer ring 5 toward a rotation center axis J, with respect to this rotation center axis J. In the same manner, the contact angle β of the row of the tapered rollers 8 means the angle β formed by a phantom line segment in a plane which extends from the track face 5B of the integral outer ring 5 toward the rotation center axis J, with respect to this rotation center axis J.

According to the bearing assembly for the axle shaft pinion having the structure as described above, the contact angle α of the row of the tapered rollers 7 is set to be 30°, and made larger than the contact angle β of the row of the tapered rollers 8 which is 20°. This will decrease a distribution of load in a radial direction on the row of the tapered rollers 7 adjacent to the pinion, and increase a distribution of load in a radial direction on the row of the tapered rollers 8 remote from the pinion, as compared with a case where both the contact angles α, β are the same. In this manner, the load in the radial direction on the row of the tapered rollers 7 adjacent to the pinion and the load in the radial direction on the row of the tapered rollers 8 remote from the pinion are made close to each other, so that unbalance of the loads in the radial direction between the two rows of the tapered rollers 7 and 8 can be moderated, thus improving the supporting rigidity and the life.

Further, in this embodiment, the contact angle α of the row of the tapered rollers 7 has been set to be 30° which is larger than 23°, and the contact angle β of the row of the tapered rollers 8 has been set to be 20° which is smaller than 23°. With this arrangement, according to this embodiment, the high supporting rigidity and long life which have been required in the bearing assembly for the axle shaft pinion can be attained.

On the other hand, in case where the contact angle α of the row of the tapered rollers 7 has been set to be 20°, and the contact angle β of the row of the tapered rollers 8 has been set to be 30°, the supporting rigidity has been decreased by about 40%, and the life has been decreased to almost a half, as compared with this embodiment. Also in case where the contact angle α of the row of the tapered rollers 7 has been set to be 20°, and the contact angle β of the row of the tapered rollers 8 has been set to be 20°, the supporting rigidity has been decreased by about 40%, and the life has been decreased to almost a half. For reference, the supporting rigidity has been measured by a displacement of a teethed part of the pinion 6 in a radial direction.

As described above, according to this embodiment, the supporting rigidity can be increased to about 170%, and the life can be prolonged to about double, as compared with the conventional case (α, β = 20°). Thus, the final reduction gear having the high supporting rigidity of the pinion 1 and the long life of the bearing can be realized.

Although in the above described embodiment, the integral outer ring 5 having two rows of the track faces 5A, 5B has been employed as the outer ring 5, two separate outer rings each having a single rowof trackmaybe employed. Moreover, although in this embodiment, the final reduction gear for the vehicle has been constituted, this invention can be applied to a bearing assembly in which a pinion shaft is supported to a fixed part in a cantilever manner by means of the double row tapered roller bearing.

As apparent from the foregoing, according to the bearing assembly for the axle shaft pinion of the invention, the contact angle of the row of the tapered rollers on the pinion shaft adjacent to the pinion is set to be larger than the contact angle of the row of the tapered rollers remote from the pinion. This will decrease a distribution of the load in a radial direction on the row of the tapered rollers adjacent to the pinion, and increase a distribution of the load in a radial direction on the row of the tapered rollers remote from the pinion, as compared with a case where both the contact angles are the same. In this manner, the load in the radial direction on the row of the tapered rollers adjacent to the pinion and the load in the radial direction on the row of the tapered rollers remote from the pinion are made close to each other, so that unbalance of the loads in the radial direction between the two rows of the tapered rollers can be moderated, thus improving the supporting rigidity and life.

According to the aforedescribed bearing assembly for the axle shaft pinion the contact angle of the row of the tapered rollers adjacent to the pinion is set to be the value larger than 23°, and the contact angle of the row of the tapered rollers remote from the pinion is set to be the value smaller than 23°. With this arrangement, high supporting rigidity and long life which have been required in the bearing assembly for the axle shaft pinion can be attained. For information, in case where the contact angle of the row of the tapered rollers adjacent to the pinion has been made smaller than 23°, the life and the rigidity have been decreased to almost a half.

For a final reduction gear for a vehicle, with said final reduction gear being provided with the aforedescribed bearing assembly for the axle shaft pinion, a high supporting rigidity of the pinion shaft and long life of the bearing can be realized.

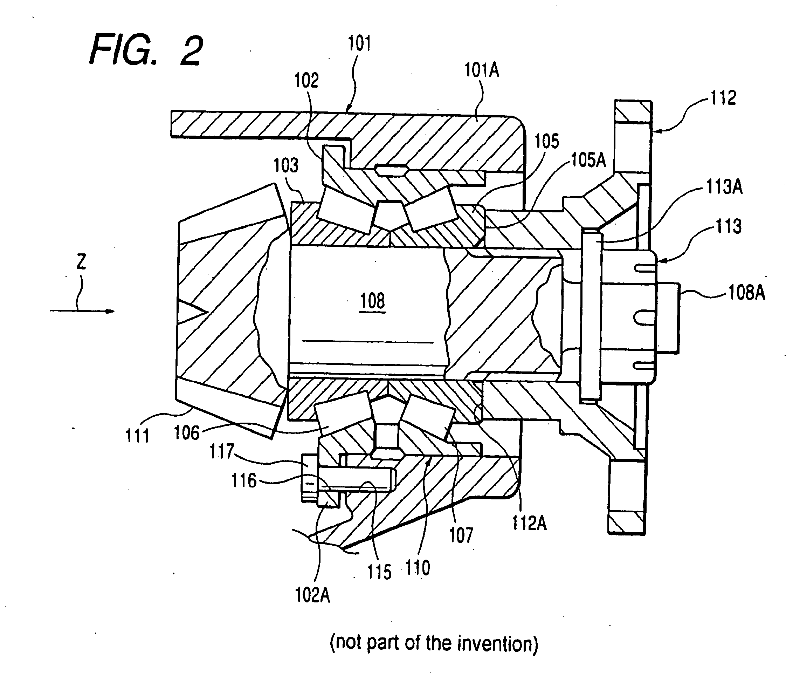

Fig. 2 shows an embodiment of the double row tapered roller bearing assembly, which is not part of the invention. A double row tapered roller bearing 110 in this embodiment includes an outer ring 102 which is inserted for engagement with an inner face of an engaging part 101A of a carrier 101 functioning as a fixed part, in an axial direction (in a direction of an arrow Z) to be tight fitted thereto. The above described double row tapered roller bearing 110 includes a first inner ring 103 and a second inner ring 105. A plurality of tapered rollers 106 are arranged between this first inner ring 103 and the above described outer ring 102 at a determined space in a circumferential direction. There are also arranged, between the above described second inner ring 105 and the above described outer ring 102, a plurality of tapered rollers 107 at a determined space in a circumferential direction. These first and second inner rings 103, 105 are engaged with an outer peripheral face of a pinion shaft 108 by tight fit, and clamped fromopposite ends in an axial direction by means of a pinion gear 111 at a distal end of the pinion shaft 108 and a companion flange 112.

An inner peripheral face of this companion flange 112 is serration engaged with the outer peripheral face of the pinion shaft 108, and pressed with a washer 113A of a washer faced nut 113 which is screwed on a male thread portion 108A of the pinion shaft 108, in an axial direction (in a direction opposite to the direction of the arrow Z). The companion flange 112 which has been pressed in the axial direction with the washer 113A presses the second inner ring 105 in the axial direction, thereby to apply a pre-load to the double row tapered roller bearing 110, and the outer peripheral face of the outer ring 102 will be expanded in a radial direction with this application of the pre-load. In this manner, the outer ring 102 is tight fitted to the inner peripheral face of the engaging part 101A of the carrier 101.

Then, the outer ring 102 of this double row tapered roller bearing 110 is fastened to the engaging part 101A by making its flange portion 102A opposed to an end face of the engaging part 101A, by aligning a threaded hole 115 formed in this engaging part 101A with a bolt hole 116 formed in the flange portion 102A, and by inserting a bolt 117 into this bolt hole 116 to be screwed into the threaded hole 115.

In a state where fastening by the above described bolt 117 has been disengaged, and the pre-load by the above described washer faced nut 113 has been removed, the outer ring 102 of this double row tapered roller bearing 110 will be released from the expansion in the radial direction on its outer peripheral face, and come into clearance fit with respect to the engaging part 101A.

Now, assembling steps of the double row tapered roller bearing assembly in this embodiment will be described. As a first step, the outer ring 102 is inserted for engagement with the inner peripheral face of the engagingpart 101Aof the carrier 101 in the axial direction (in the direction of the arrow Z). A manner of engagement on this occasion is clearance fit. Then, the first inner ring 103 is press fitted to the pinion shaft 108 in an axial direction (in a direction opposite to the direction of the arrow Z), and then, the pinion shaft 108 with this first inner ring 103 press fitted is inserted into the outer ring 102 in the direction of the arrow Z. On this occasion, a plurality of the tapered rollers 106 are disposed between the first inner ring 103 and the outer ring 102.

As a next step, the second inner ring 105 is press fitted to the pinion shaft 108 which has been inserted into the outer ring 102, and further, the companion flange 112 is press fitted to the pinion shaft 108. On this occasion, a plurality of the tapered rollers 107 are disposed between the second inner ring 105 and the outer ring 102.

Finally, the washer faced nut 113 is screwed on the male thread portion 108A of the pinion shaft 108 and tightened, thereby enabling an end face 112A of the companion flange 112 to press an end face 105A of the second inner ring 105 in the axial direction. In this manner, the pre-load is applied to the double row tapered roller bearing 110. Due to this application of the pre-load, the outer peripheral face of the outer ring 102 will be expanded, and come into tight fit with respect to the engaging part 101A of the carrier 101.

As described above, according to this embodiment, when the outer ring 102 is to be incorporated into the engaging part 101A, the outer ring 102 of the above described double row tapered roller bearing 110 is clearance fitted to the above described engaging part 101A, because the pre-load in the axial direction is not applied to the bearing 110, and accordingly, the outer ring 102 can be easily engaged with the engaging part 101A. On the other hand, in the state where the outer ring 102 has been incorporated into the engaging part 101A, the outer ring 102 can be expanded in the radial direction by applying the pre-load to the bearing 10 and tight fitted to the engaging part 101A. As the results, assembling performance and supporting rigidity can be compatible with each other according to this embodiment.

Although in the above described embodiment, the outer ring 102 is so adapted as to be tight fitted to the engaging part 101A when the pre-load has been applied to the double row tapered roller bearing 110, it is to be noted that the outer ring 102 may be set so as to be transition fitted.

As apparent from the foregoing, when the outer ring of the double row tapered roller bearing is incorporated into the fixed part, the outer peripheral face of the outer ring is clearance fitted to the fixed part because the pre-load in the axial direction is not applied to the bearing, and consequently, the outer ring can be easily engaged with the fixed part. On the other hand, in the state where the outer ring has been incorporated into the fixed part, the outer ring can be tight fitted (or snap fitted) to the fixed part by applying the pre-load to the bearing and expanding the outer ring in the radial direction. As the results, assembling performance and supporting rigidity can be compatible with each other.

According to the aforementioned method for assembling the double row tapered roller bearing assembly, assembling performance will be improved, because in the above described first step, the double row tapered roller bearing is engaged with the fixed part by clearance fit. Moreover, in the above described second step, the pre-load is applied to the double row tapered roller bearing by pressing both the end faces in the axial direction of the double row tapered roller bearing, in the state where the rotation shaft has been press fitted in the double row tapered roller bearing. Due to this application of the pre-load, the outer ring of the double row tapered roller bearing is expanded in a radial direction, and the outer ring is tight fitted (or transition fitted) to the fixed part. Therefore, according to the assembling method of this invention, while enjoying favorable assembling performance of the bearing, supporting rigidity of the bearing can be also enhanced.

## Claims

1. A bearing assembly of a pinion shaft (1) supported in a cantilever manner to a fixed part (4) by a double row tapered roller bearing comprising:
- the pinion shaft (1) at which a pinion (6) is provided;
- a first row of tapered rollers (7) adjacent to the pinion (6); and
- a second row of tapered rollers (8) remote from the pinion (6) with respect to the first row of tapered rollers (7),
wherein an inner ring (2, 3) defining first track faces (2C, 3C) is fixed to the pinion shaft (1), and an outer ring (5) defining second track faces (5A, 5B) is fixed to the fixed part (4), and the first row of tapered rollers (7) and the second row of tapered rollers (8) are arranged between the first (2C, 3C) and second track faces (5A, 5B),
wherein the contact angle of the first row of tapered rollers (7) is defined by an acute contact angle (α) between the first row of tapered rollers (7) and the second track face (5A), on the one hand, and the axis of the pinion (6), on the other hand, and the contact angle of the second row of tapered rollers (8) is defined by an acute contact angle (β) between the second row of tapered rollers (8) and the second track face (5B), on the one hand, and the axis of the pinion (6), on the other hand, and
wherein the contact angle (α) of the first row of tapered rollers (7) on the pinion shaft (1) is set to be larger than the contact angle (β) of the second row of tapered rollers (8) on the pinion shaft (1),
**characterized in that**
the contact angle of the first row of the tapered rollers (7) is set to be a value larger than 23°, and the contact angle of the second row of the tapered rollers (8) is set to be a value smaller than 23°.

2. A final reduction gear for a vehicle comprising a bearing assembly of a pinion shaft according to claim 1.

## Patentansprüche

1. Lagerbaugruppe einer Ritzelwelle (1), die durch ein zweireihiges Kegelrollenlager auslegerartig an einem feststehenden Teil (4) getragen wird, wobei sie umfasst:
die Ritzelwelle (1), an der ein Ritzel (6) vorhanden ist;
eine erste Reihe von Kegelrollen (7) an das Ritzel (6) angrenzend; und
eine zweite Reihe von Kegelrollen (8), die in Bezug auf die erste Reihe von Kegelrollen (7) von dem Ritzel (6) entfernt ist,
wobei ein innerer Ring (2, 3), der erste Laufbahnflächen (2C, 3C) bildet, an der Ritzelwelle (1) befestigt ist und ein äußerer Ring (5), der zweite Laufbahnflächen (5A, 5B) bildet, an dem feststehenden Teil (4) befestigt ist und die erste Reihe von Kegelrollen (7) sowie die zweite Reihe von Kegelrollen (8) zwischen den ersten (2C, 3C) und den zweiten Laufbahnflächen (5A, 5B) angeordnet sind,
wobei der Kontaktwinkel der ersten Reihe von Kegelrollen (7) durch einen spitzen Kontaktwinkel (α) zwischen der ersten Reihe von Kegelrollen (7) und der zweiten Laufbahnfläche (5A) einerseits und der Achse des Ritzels (6) andererseits gebildet wird und der Kontaktwinkel der zweiten Reihe von Kegelrollen (8) durch einen spitzen Kontaktwinkel (ß) zwischen der zweiten Reihe von Kegelrollen (8) und der zweiten Laufbahnfläche (5B) einerseits und der Achse des Ritzels (6) andererseits gebildet wird, und
wobei der Kontaktwinkel (α) der ersten Reihe von Kegelrollen (7) an der Ritzelwelle (1) so eingestellt ist, dass er größer ist als der Kontaktwinkel (ß) der zweiten Reihe von Kegelrollen (8) an der Ritzelwelle (1),
**dadurch gekennzeichnet, dass** der Kontaktwinkel der ersten Reihe der Kegelrollen (7) auf einen Wert größer als 23° eingestellt ist und der Kontaktwinkel der zweiten Reihe der Kegelrollen (8) auf einen Wert kleiner als 23° eingestellt ist.

2. Enduntersetzungsgetriebe für ein Fahrzeug, das eine Lagerbaugruppe einer Ritzelwelle nach Anspruch 1 umfasst.

## Revendications

1. Ensemble de palier d'un arbre de pignon (1) supporté en porte-à-faux sur une partie fixe (4) par un roulement à rouleaux coniques à double rangée comprenant :
l'arbre de pignon (1) qui est muni d'un pignon (6) ; une première rangée de rouleaux coniques (7) adjacente au pignon (6) ; et
une seconde rangée de rouleaux coniques (8) éloignée du pignon (6) par rapport à la première rangée de rouleaux coniques (7),
dans lequel une bague intérieure (2, 3) définissant des premiers chemins de roulement (2C, 3C) est fixée sur l'arbre de pignon (1), et une bague extérieure (5) définissant des seconds chemins de roulement (5A, 5B) est fixée sur la partie fixe (4), et la première rangée de rouleaux coniques (7) et la seconde rangée de rouleaux coniques (8) sont agencées entre les premiers (2C, 3C) et seconds (5A, 5B) chemins de roulement, et dans lequel l'angle de contact de la première rangée de rouleaux coniques (7) est défini par un angle de contact aigu (α) entre la première rangée de rouleaux coniques (7) et le second chemin de roulement (5A), d'une part, et l'axe du pignon (6), d'autre part, et l'angle de contact de la seconde rangée de rouleaux coniques (8) est défini par un angle de contact aigu (ß) entre la seconde rangée de rouleaux coniques (8) et le second chemin de roulement (5B), d'une part, et l'axe du pignon (6), d'autre part,
et l'angle de contact (α) de la première rangée de rouleaux coniques (7) sur l'arbre de pignon (1) est réglé pour être supérieur à l'angle de contact (β) de la seconde rangée de rouleaux coniques (8) sur l'arbre de pignon (1),
**caractérisé en ce que** l'angle de contact de la première rangée de rouleaux coniques (7) est réglé pour être une valeur supérieure à 23°, et l'angle de contact de la seconde rangée de rouleaux coniques (8) est réglé pour être une valeur inférieure à 23°.

2. Engrenage de réduction final pour un véhicule comprenant un ensemble de palier d'un arbre de pignon selon la revendication 1.
